# EUROPEAN PATENT SPECIFICATION

(11) **EP 3 031 630 B1**
(45) Date of publication and mention of the grant of the patent: **17.07.2019**
(21) Application number: 15197362.5
(22) Date of filing: 01.12.2015
(51) Int. Cl.: B60C 15/00, B60C 9/08, B60C 9/09, B60C 15/06

(54) **AIRCRAFT TIRE**
FLUGZEUGREIFEN
PNEU D'AÉRONEF

(30) Priority: 12.12.2014 US 201462091079 P; 11.09.2015 US 201514851704
(43) Date of publication of application: 15.06.2016
(73) Proprietor: The Goodyear Tire & Rubber Company, Akron, Ohio 44316 (US)
(72) Inventor: UEYOKO, Kiyoshi, Copley, OH Ohio 44321 (US); REITER, Leonard James, Norton, OH Ohio 44203 (US); KMIECIK, Frank Anthony, Akron, OH Ohio 44313 (US); BOEHLEFELD, Robert John, Brecksville, OH Ohio 44141 (US); MARTS, Bret Herbert, Cuyahoga Falls, OH Ohio 44221 (US)
(74) Representative: Kutsch, Bernd

(56) References cited:
- WO-A1-2014/084370
- WO-A2-2011/097213
- US-A1- 2015 020 942

## Description

### Field of the Invention

This invention relates to pneumatic tires having a carcass and more particularly to high speed heavy load tires such as those used on aircraft.

### Background of the Invention

The radial carcass reinforcements of aircraft tires generally comprise several plies of textile cords, which are anchored to at least one annular bead member. A first group of reinforcing plies are generally wound around said annular bead member from the inside to the outside, forming turn-ups, the respective ends of which are radially spaced from the axis of rotation of the tire. The second group of plies are generally wound around the annular bead member from the outside to the inside of the tire.

Aircraft tires typically use numerous layers of ply which can significantly contribute to the tire weight. The numerous layers of ply may result in bead durability issues. It is thus desired to provide a lightweight efficient tire structure having improved bead durability. It is a further desired to provide an improved bead structure wherein the use of inside turn-up plies and outside turndown plies and their respective locations are optimized. Thus an improved aircraft tire is needed, which is capable of meeting high speed, high load and with reduced weight.

WO-A-2014/084370 describes a pneumatic tire having a carcass including an axially inner ply which extends down from the tread and axially inward of the bead core, the axially inner ply being wound around the bead core forming a turn-up located axially outward of the bead core. The carcass further includes a first axially outer ply which extends down from the tread towards the bead core wherein this first axially outer ply is separated from the turn-up of the axially inner ply by a first spacer layer.

WO-A-2011/097213 describes an aircraft tire comprising a plurality of axially inner plies and axially outer plies that are each turned around a bead core.

US-A-2015/0020942 describes a tire having two axially inner plies with two ply turn-up portions and two axially outer plies extending to and ending under the bead core.

### Summary of the Invention

The invention relates to a tire in accordance with claim 1.

Dependent claims refer to preferred embodiments of the invention.

A pneumatic tire in accordance a preferred aspect of the present invention includes two annular bead portions, a carcass, and a belt reinforcement layer. The carcass extends between the bead portions through sidewall portions and a tread portion, wherein the carcass includes at least two axially inner plies which extend down from the tread and axially inward of the bead core, said at least two axially inner plies being wound around the bead core forming respective turn-ups, each turnup being located axially outward of the bead core. The carcass further includes a first axially outer ply which extends down from the tread towards the bead core and positioned axially outward of the bead core, wherein the axially outer ply is separated from at least one of the turnups by a spacer layer.

### Definitions

"100 percent Modulus" means the force in MegaPascal (MPa) required to produce 100 percent elongation (e.g., stretch to two times original length).

"300 percent Modulus" or "M300 modulus" means the force in MegaPascal (MPa) required to produce 300 percent elongation (e.g., stretch to four times original length).

"Apex" means an elastomeric filler located radially above the bead core and between the plies and the turnup ply or axially outside the turnup ply.

"Axial" and "axially" are used herein to refer to lines or directions that are parallel to the axis of rotation of the tire.

"Bead" means that part of the tire comprising an annular tensile member wrapped by ply cords and shaped, with or without other reinforcement elements such as flippers, chippers, apexes, toe guards and chafers, to fit the design rim.

"Belt structure" means one or at least two annular layers or plies of parallel cords, woven or unwoven, underlying the tread, unanchored to the bead, and having cords inclined respect to the equatorial plane of the tire. The belt structure may also include plies of parallel cords inclined at relatively low angles, acting as restricting layers.

"Carcass" means the tire structure apart from the belt structure, tread, undertread, and sidewall rubber over the plies, but including the beads.

"Chafer" refers to a preferably narrow strip of material placed around the exterior of the bead to protect bead structures from the rim, distribute flexing radially above the rim, and to better seal the tire to the rim.

"Chipper" refers to a preferably narrow band of fabric or steel cords located in the bead area whose function is to reinforce the bead area and stabilize the radially inwardmost part of the sidewall.

"Circumferential" means lines or directions extending along the perimeter of the surface of the annular tire parallel to the Equatorial Plane (EP) and perpendicular to the axial direction; it can also refer to the direction of the sets of adjacent circular curves whose radii define the axial curvature of the tread, as viewed in cross section.

"Cord" means one of the reinforcement strands which the reinforcement structures of the tire are comprise.

"Cord angle" means the acute angle, left or right in a plan view of the tire, formed by a cord with respect to the equatorial plane. The "cord angle" is measured in a cured but uninflated tire.

"Crown" means that portion of the tire within the width limits of the tire tread.

"Equatorial plane (EP)" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Gauge" refers generally to a measurement, and specifically to a thickness measurement.

"Inner" means toward the inside of the tire and "outer" means toward its exterior.

"Load Range" means load and inflation limits for a given tire used in a specific type of service as defined by tables in The Tire and Rim Association, Inc.

"Normal Load" means the specific design inflation pressure and load assigned by the appropriate standards organization for the service condition for the tire.

"Ply" means a cord-reinforced layer of rubber-coated radially deployed or otherwise parallel cords.

"Radial" and "radially" are used to mean directions radially toward or away from the axis of rotation of the tire.

"Radial Ply Structure" means the one or more carcass plies or which at least one ply has reinforcing cords oriented at an angle of between 65° and 90° with respect to the equatorial plane of the tire.

"Radial Ply Tire" means a belted or circumferentially-restricted pneumatic tire in which at least one ply has cords which extend from bead to bead are laid at cord angles between 65° and 90° with respect to the equatorial plane of the tire.

### Brief Description of the Drawings

The present invention will be described by way of example and with reference to the accompanying drawing, in which:
Figure 1 is an example schematic partial cross-sectional view of a bead structure in accordance with the present invention.
Figure 2 is an example schematic illustrating a partial cross-sectional view of a bead structure in the plane 2B-2B, illustrating the spacing of the carcass plies.

### Detailed Description of Example Embodiments of the Present Invention

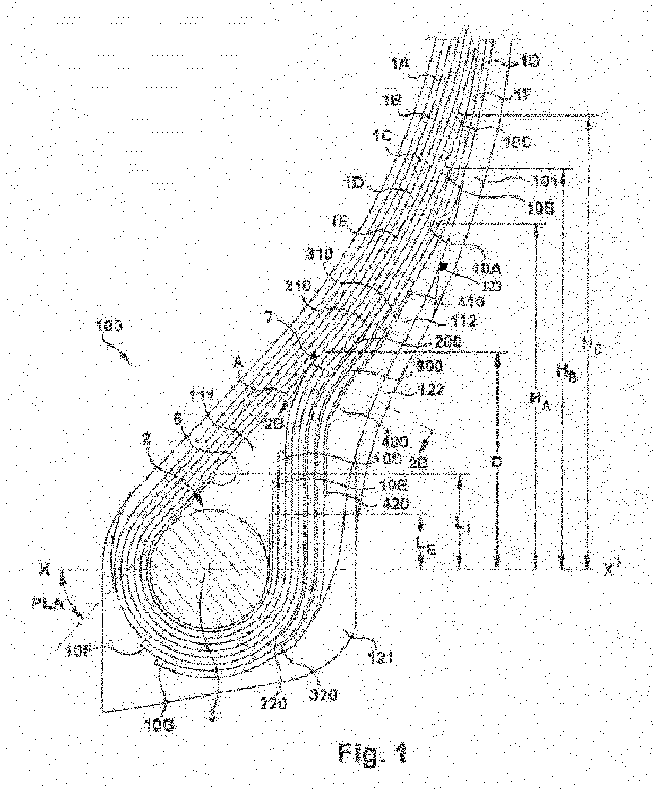

Figure 1 schematically shows a partial cross section of an example tire bead structure 100 of a pneumatic tire in accordance with the present invention. The example tire shown is that of a standard size tire 50x20R22 with a load rating of 57,100 pounds (25900 kg) and a pressure rating of 220 psi (1516847 Pa). Such a structure 100 may produce excellent durability and reduced chafing at the rim.

A carcass reinforcement 10 is preferably formed of five axially inner plies 1A to 1E of radial textile cords, and of preferably two axially outer plies 1F, 1G.

The cross section of the bead 2 is preferably radially surmounted by a filler or first apex 111 of elastomeric mix having substantially the shape of a triangle in cross-section, the terminal end 7 of which extends radially from the axis of rotation of the tire a distance D from a reference line XX¹ extending axially through the center of the bead wire.

Preferably, three of the carcass plies 1A, 1B, 1C extend down from the tread and are positioned axially inward and are wound around the bead core 2, forming turn-ups 10A, 10B, 10C, respectively.

The turn-up 10A of the inner carcass ply 1A axially furthest towards the inside preferably has its end spaced radially form the line XX¹ by the amount HA, which, for example, may be 54mm or 1.5 times the Apex height or distance D, 36mm, or may be in a range of from 50 to 60 mm.

Further, for example, the turnup ends of the inner plies 10B and 10C may also be located radially above the terminal end 7 of the first apex 111 at distances HB and HC of for instance 58mm and 68mm, respectively.

Turnups 10A, 10B, 10C are preferably located radially outward of the apex tip 7, and preferably higher than the chafer ending 123 of chafer 122. Turnups 10D and 10E are located radially inward of the apex height D. Preferably, the axially innermost ply 1E has the radially innermost turnup end 10E.

The two carcass downplies 1F, 1G encase the turn-ups 10A, 10B, 10C, 10D, 10E of the inner carcass plies 1A, 1B, 1C, 1D, 1E.

The plies 1D and 1E may, for example, be wound around the bead wire 3 over a portion or circular arc corresponding to an angle at the center of the circle circumscribed on the bead wire 3 equal to 180° or less so that the ends 10D, 10E of these outer plies 1D, 1E are situated radially outward of the reference line XX¹.

A first spacer 200 is preferably located between the turnup 10A of the axially innermost ply 1A and down ply 1F. The first spacer 200 is preferably formed of gum rubber or reinforced ply. The first spacer 200 preferably has a thickness t1 in the range of from 0.2*d to 1.2*d or from 0.4*d to 0.8*d, where d is the cord diameter of the reinforcement cords of the down ply layer 1F.

The first spacer 200 has a radially outer end 210 that is preferably located radially outward of the apex tip 7. The second spacer 200 has a radially inner end 220 that is preferably located radially inward of line X-X'.

A second spacer 300 is located between the outer plies 1F and 1G. The second spacer 300 preferably has a radially outer end 310 that is located radially outward of the apex tip 7, and preferably radially outward of the first spacer radially outer end 210.

The second spacer 300 is preferably formed of gum rubber or reinforced ply. The second spacer 300 preferably has a radially inner end 320 that is located radially inward of line X-X'. The second spacer 300 preferably has a thickness t2 in the range of from 0.2*d to 1.2*d or from 0.4*d to 0.8*d, where d is the cord diameter of the outer ply cord of ply layer 1F.

An optional third spacer 400 may be located between the outer ply 1G and the second apex 112. The third spacer 400 is preferably formed of gum rubber or reinforced ply.

The third spacer 400 preferably has a radially outer end 410 that is located radially outward of the apex tip 7 and a radially inner end 412 that is located radially inward of line XX. The third spacer 400 preferably has a thickness t3 in the range of from 0.2*d to 1.2*d or from 0.4*d to 0.8*d, where d is the cord diameter of the outer ply cord of ply layer 1G.

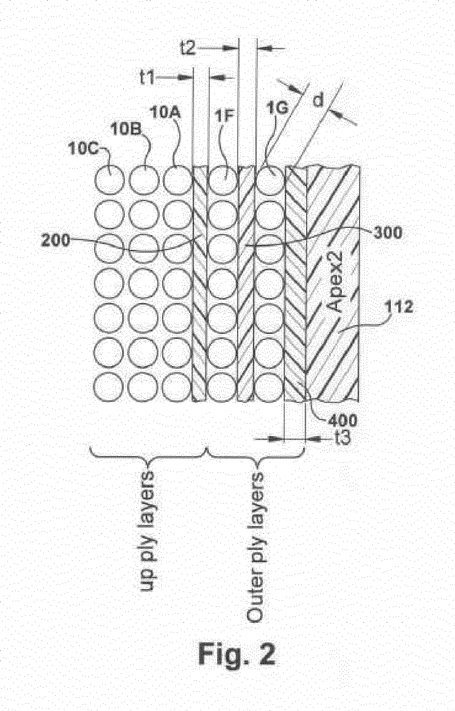

Fig 2 is a close up view of the ply in cross section in the direction 2B-2B, illustrating the ply cord spacing due to the spacers. As shown in Figure 2, when the tire sidewall in the vicinity of arrows 2B-2B is subject to severe load, and the tire bends over the rim. As the tire bends over the rim, the outer ply layers 1F and 1G are subject to the highest compression loads. The spacers function to keep the outer ply layers 1F and 1G separated, so that they are better able to resist the high shear/ bending loads.

The angle of the inner plies is measured by the angle shown in Fig. 1 designated as PLA. The angle PLA is the angle between the axial direction (line X-X') and the axially outermost ply 1E of the axially inner plies 1A-1E, or the ply closest to the bead core. The angle PLA is measured radially outward of the bead core and radially inward of the outer tip of the apex. Preferably, PLA ranges from 40-55 degrees as measured on a new tire cut section that is not mounted on a rim.

A flipper 5 may separate the bead wire 3 from the carcass reinforcement 10 and be formed of radial textile cords identical to the carcass ply cords (or different cords). One terminal end of the flipper 5 may, for example, may extend a radial distance LI of 18mm (or from 15 to 21 mm) from the line XX¹, a distance that may be less than the distances HB and HC referred to above. Three ends may thus be arranged radially above the terminal end A of the first apex 111 and be staggered between the terminal end and a location of the sidewall where the tire has a maximum axial width. The other terminal end of the flipper 5 may extend a radial distance L_{E} from the line XX¹ equal to 10mm (or from 7 mm to 13 mm).

The tire bead 2 is preferably supplemented by a reinforcement ply or outer first chafer 121 reinforced with radial textile cords. The rubber chafer 121 may permit a better distribution of the pressures between the tire and its service rim, as well as assuring protection of the carcass plies against damage upon mounting. The axially outer end of the first chafer 121 is preferably be slightly above (for instance about 20 mm) the reference line XX¹, while its axially inner end is preferably below the line XX¹.

An example tire with a bead structure as shown in Figure 1 includes two annular bead portions/structures 100, a carcass 10 extending between the bead portions through two sidewall portions 101, and a tread portion (not shown). The carcass 10 has at least one carcass ply 1A, 1B, 1C, 1D, and/or 1E of parallel cords turned up about the bead portions 100, and a belt reinforcement layer (not shown) disposed radially outside the carcass 10 and radially inside the tread portion. Each annular bead portion 100 includes an annular bead core 3 having the carcass ply or plies 1A-1E turned up around the bead core, a first apex 111 disposed adjacent and radially outward of the bead core, a second apex 112 disposed axially outward of the bead core and the carcass ply or plies, a first chafer 121 disposed adjacent the carcass ply or plies and axially outward of the bead core, and a second chafer 122 disposed adjacent and axially outward of the second apex.

The first apex 111 is preferably constructed of a material with a 100 percent modulus between 4 to 12 MPa.

The second apex is preferably constructed of a material with a 100 percent modulus between 1 to 3 MPa.

The first chafer 121 is preferably constructed of a material with a 100 percent modulus between 3 to 6 MPa.

The second chafer 122 is preferably constructed of a material with a 100 percent modulus between 1 to 4 MPa.

The axially outer end of the second chafer 122 may be 60 mm (or in an range of from 55 to 65 mm) above the line XX¹. The axially outer end of the second chafer 122 may thus cover the contact area between the tire and the wheel flange under a 200% rated loading condition.

The sidewall portion 101 is preferably constructed of a material with a 100 percent modulus between 1.0 MPa and 2.0 MPa.

Below is a Table of other example properties for the first apex 111, second apex 112, first chafer 121, second chafer 122, and sidewall portion 101.

**Table 1**

| | Chafer 1 | Chafer 2 | Apex 1 | Apex 2 | Sidewall |
|---|---|---|---|---|---|
| 100% modulus (MPa) | 3-6 | 1-4 | 4-12 | 1-3 | 1-2 |

As stated above, a bead structure 100 in accordance with the present invention produces excellent durability and reduced chafing at the rim. This bead structure 100 thus enhances the performance of the pneumatic tire, even though the complexities of the structure and behavior of the pneumatic tire are such that no complete and satisfactory theory has been propounded.

## Claims

1. A pneumatic tire comprising two annular bead portions having a bead core (2) and a carcass extending between the bead portions through sidewall portions and a tread portion, wherein the carcass includes at least two axially inner plies (1A, 1B, 1C, 1D, 1E) which extend down from the tread and axially inward of the bead core (2), said at least two axially inner plies (1A, 1B, 1C, 1D, 1E) being wound around the bead core (2) forming respective turn-ups (10A, 10B, 10C, 10D, 10E), each turn-up (10A, 10B, 10C, 10D, 10E) being located axially outward of the bead core (2), wherein the carcass further includes a first axially outer ply (1F) which extends down from the tread towards the bead core (2) and which is positioned axially outward of the bead core (2), wherein the first axially outer ply (1F) is separated from at least one of the turn-ups (10A, 10B, 10C, 10D, 10E) by a first spacer layer (200), and
wherein the tire comprises a second axially outer ply (1G) located adjacent the first axially outer ply (1F), wherein the first axially outer ply (1F) is separated from the second axially outer ply (1G) by a second spacer layer (300).

2. The pneumatic tire of claim 1 wherein the first spacer layer (200) has a gauge thickness in a range of from 0.2*d to 1.2*d, alternatively in a range of from 0.4*d to 0.8*d, wherein d is the cord diameter of the reinforcements of the first axially outer ply (1F, 1G).

3. The pneumatic tire of claim 1 wherein the second spacer layer (300) has a gauge thickness in a range of from 0.2*d to 1.2*d, alternatively in a range of from 0.4*d to 0.8*d, wherein d is the cord diameter of the reinforcements of the first axially outer ply (1F).

4. The pneumatic tire of at least one of the previous claims wherein the first spacer layer (200) has a radially outer end (210) located radially outward of the tip (7) of a first apex (111).

5. The pneumatic tire of at least one of the previous claims wherein the second spacer layer (300) has a radially outer end (310) located radially outward of the tip (7) of a first apex (111).

6. The pneumatic tire of at least one of the previous claims wherein the first spacer layer (200) has a radially outer end (210) located radially outward of the bead center in the range of from two to five bead core diameters, alternatively three to five bead core diameters.

7. The pneumatic tire of at least one of the previous claims wherein the second spacer layer (300) has a radially outer end (310) located radially outward of the bead center in the range of from two to five bead core diameters, alternatively three to five bead core diameters.

8. The pneumatic tire of at least one of the previous claims wherein the first spacer layer (200) has a radially inner end (220) located radially inward of the radially innermost surface of the bead core (2).

9. The pneumatic tire of at least one of the previous claims wherein the first spacer layer (200) has a radially inner end (220) located radially inward of the center of the bead core (2).

10. The pneumatic tire of at least one of the previous claims wherein the second spacer layer (300) has a radially inner end (320) located radially inward of the radially innermost turnup (10E).

11. The pneumatic tire of at least one of the previous claims wherein the second spacer layer (300) has a radially inner end (320) located radially inward of the center of the bead core (2).

12. The pneumatic tire of at least one of the previous claims further comprising a third spacer layer (400) located between the first axially outer ply (1F) and a second apex (112) or between the second axially outer ply (1G) and a second apex (112), wherein the second apex preferably extends axially outward of the carcass plies (1A, 1B, 1C, 1D, 1E, 1F, 1G) and carcass ply turn-ups (10A, 10B, 10C, 10D, 10E).

13. The pneumatic tire of claim 12 wherein a chafer (122) is disposed adjacent and axially outward of the second apex (112).

14. The pneumatic tire of at least one of the previous claims wherein the tire is an aircraft tire.

## Patentansprüche

1. Luftreifen, umfassend zwei ringförmige Wulstbereiche, die einen Wulstkern (2) aufweisen, und eine Karkasse, die sich zwischen den Wulstbereichen durch Seitenwandbereiche und einen Laufflächenbereich erstreckt, wobei die Karkasse mindestens zwei axial innere Lagen (1A, 1B, 1C, 1D, 1E) beinhaltet, die sich von der Lauffläche nach unten und axial einwärts von dem Wulstkern (2) erstrecken, wobei die mindestens zwei axial inneren Lagen (1A, 1B, 1C, 1D, 1E) um den Wulstkern (2) herumgewickelt sind, wobei sie jeweilige Lagenumschläge (10A, 10B, 10C, 10D, 10E) bilden, wobei sich jeder Lagenumschlag (10A, 10B, 10C, 10D, 10E) axial auswärts von dem Wulstkern (2) befindet, wobei die Karkasse weiter eine erste axial äußere Lage (1F) beinhaltet, die sich von der Lauffläche nach unten zu dem Wulstkern (2) hin erstreckt und die axial auswärts von dem Wulstkern (2) positioniert ist, wobei die erste axial äußere Lage (1F) von mindestens einem der Lagenumschläge (10A, 10B, 10C, 10D, 10E) durch eine erste Abstandsschicht (200) getrennt ist, und
wobei der Reifen eine zweite axial äußere Lage (1G) umfasst, die sich benachbart zu der ersten axial äußeren Lage (1F) befindet, wobei die erste axial äußere Lage (1F) von der zweiten axial äußeren Lage (1G) durch eine zweite Abstandsschicht (300) getrennt ist.

2. Luftreifen nach Anspruch 1, wobei die erste Abstandsschicht (200) ein Dickenmaß im Bereich von 0,2*d bis 1,2*d, alternativ im Bereich von 0,4*d bis 0,8*d, aufweist, wobei d der Korddurchmesser der Verstärkungen der ersten axial äußeren Schicht (1F, 1G) ist.

3. Luftreifen nach Anspruch 1, wobei die zweite Abstandsschicht (300) ein Dickenmaß im Bereich von 0,2*d bis 1,2*d, alternativ im Bereich von 0,4*d bis 0,8*d, aufweist, wobei d der Korddurchmesser der Verstärkungen der ersten axial äußeren Schicht (1F) ist.

4. Luftreifen nach mindestens einem der vorhergehenden Ansprüche, wobei die erste Abstandsschicht (200) ein radial äußeres Ende (210) radial auswärts von der Spitze (7) eines ersten Kernprofils (111) angeordnet aufweist.

5. Luftreifen nach mindestens einem der vorhergehenden Ansprüche, wobei die zweite Abstandsschicht (300) ein radial äußeres Ende (310) radial auswärts von der Spitze (7) eines ersten Kernprofils (111) angeordnet aufweist.

6. Luftreifen nach mindestens einem der vorhergehenden Ansprüche, wobei die erste Abstandsschicht (200) ein radial äußeres Ende (210) radial auswärts von dem Wulstzentrum im Bereich von zwei bis fünf Wulstkerndurchmessern, alternativ drei bis fünf Wulstkerndurchmessern, angeordnet aufweist.

7. Luftreifen nach mindestens einem der vorhergehenden Ansprüche, wobei die zweite Abstandsschicht (300) ein radial äußeres Ende (310) radial auswärts von dem Wulstzentrum im Bereich von zwei bis fünf Wulstkerndurchmessern, alternativ drei bis fünf Wulstkerndurchmessern, angeordnet aufweist.

8. Luftreifen nach mindestens einem der vorhergehenden Ansprüche, wobei die erste Abstandsschicht (200) ein radial inneres Ende (220) radial einwärts von der radial innersten Oberfläche des Wulstkerns (2) angeordnet aufweist.

9. Luftreifen nach mindestens einem der vorhergehenden Ansprüche, wobei die erste Abstandsschicht (200) ein radial inneres Ende (220) radial einwärts von dem Zentrum des Wulstkerns (2) angeordnet aufweist.

10. Luftreifen nach mindestens einem der vorhergehenden Ansprüche, wobei die zweite Abstandsschicht (300) ein radial inneres Ende (320) radial einwärts von dem radial innersten Lagenumschlag (10E) angeordnet aufweist.

11. Luftreifen nach mindestens einem der vorhergehenden Ansprüche, wobei die zweite Abstandsschicht (300) ein radial inneres Ende (320) radial einwärts von dem Zentrum des Wulstkerns (2) angeordnet aufweist.

12. Luftreifen nach mindestens einem der vorhergehenden Ansprüche, weiter eine dritte Abstandsschicht (400) umfassend, die sich zwischen der ersten axial äußeren Lage (1F) und einem zweiten Kernprofil (112) oder zwischen der zweiten axial äußeren Lage (1G) und einem zweiten Kernprofil (112) befindet, wobei sich das zweite Kernprofil bevorzugt axial auswärts von den Karkassenlagen (1A, 1B, 1C, 1D, 1E) und Karkassenlagenumschlägen (10A, 10B, 10C, 10D, 10E) erstreckt.

13. Luftreifen nach Anspruch 12, wobei ein Wulstschutzstreifen (122) benachbart zu und axial auswärts von dem zweiten Kernprofil (112) angeordnet ist.

14. Luftreifen nach mindestens einem der vorhergehenden Ansprüche, wobei der Reifen ein Flugzeugreifen ist.

## Revendications

1. Bandage pneumatique comprenant deux portions annulaires faisant office de talons possédant une tringle de talon (2) et une carcasse s'étendant entre les portions faisant office de talons en passant par des portions faisant office de flancs et une portion faisant office de bande de roulement ; dans lequel la carcasse englobe au moins deux nappes internes en direction axiale (1A, 1B, 1C, 1D, 1E) qui s'étendent vers le bas à partir de la bande de roulement et vers l'intérieur en direction axiale de la tringle de talon (2), lesdites deux nappes internes en direction axiale (1A, 1B, 1C, 1D, 1E) qui viennent s'enrouler autour de la tringle de talon (2) formant des retournements vers le haut respectifs (10A, 10B, 10C, 10D, 10E), chaque retournement vers le haut (10A, 10B, 10C, 10D, 10E) étant situé à l'extérieur de la tringle de talon (2) en direction axiale ; dans lequel la carcasse englobe en outre une première nappe externe en direction axiale (1F) qui s'étend vers le bas à partir de la bande de roulement en direction de la tringle de talon (2) et qui est disposée à l'extérieur de la tringle de talon (2) en direction axiale ; dans lequel la première nappe externe en direction axiale (1F) est séparée d'au moins un des retournements vers le haut (10A, 10B, 10C, 10D, 10E) par une première couche d'écartement (200) ; et dans lequel le bandage pneumatique comprend une deuxième nappe externe en direction axiale (1G) située en position adjacente à la première nappe externe en direction axiale (1F) ; dans lequel la première nappe externe en direction axiale (1F) est séparée de la deuxième nappe externe en direction axiale (1G) par une deuxième couche d'écartement (300).

2. Bandage pneumatique selon la revendication 1, dans lequel la première couche d'écartement (200) possède une épaisseur d'étalonnage dans une plage de 0,2*d à 1,2*d, en variante dans une plage de 0,4*d à 0,8*d, où d représente le diamètre de câblé des renforcements de la première nappe externe en direction axiale (1F, 1G).

3. Bandage pneumatique selon la revendication 1, dans lequel la deuxième couche d'écartement (300) possède une épaisseur d'étalonnage dans une plage de 0,2*d à 1,2*d, en variante dans une plage de 0,4*d à 0,8*d, où d représente le diamètre de câblé des renforcements de la première nappe externe en direction axiale (1F).

4. Bandage pneumatique selon au moins une des revendications précédentes, dans lequel la première couche d'écartement (200) possède une extrémité externe en direction radiale (210) située à l'extérieur de l'extrémité (7) d'un premier bourrage sur tringle (111) en direction radiale.

5. Bandage pneumatique selon au moins une des revendications précédentes, dans lequel la deuxième couche d'écartement (300) possède une extrémité externe en direction radiale (310) située à l'extérieur de l'extrémité (7) d'un premier bourrage sur tringle (111) en direction radiale.

6. Bandage pneumatique selon au moins une des revendications précédentes, dans lequel la première couche d'écartement (200) possède une extrémité externe en direction radiale (210) située à l'extérieur du centre du talon en direction radiale, dans la plage de deux à cinq diamètres de tringles de talons, en variante de trois à cinq diamètres de tringles de talons.

7. Bandage pneumatique selon au moins une des revendications précédentes, dans lequel la deuxième couche d'écartement (300) possède une extrémité externe en direction radiale (310) située à l'extérieur du centre du talon en direction radiale, dans la plage de deux à cinq diamètres de tringles de talons, en variante de trois à cinq diamètres de tringles de talons.

8. Bandage pneumatique selon au moins une des revendications précédentes, dans lequel la première couche d'écartement (200) possède une extrémité interne en direction radiale (220) située à l'intérieur en direction radiale de la surface la plus interne en direction radiale de la tringle de talon (2).

9. Bandage pneumatique selon au moins une des revendications précédentes, dans lequel la première couche d'écartement (200) possède une extrémité interne en direction radiale (220) située à l'intérieur en direction radiale du centre de la tringle de talon (2).

10. Bandage pneumatique selon au moins une des revendications précédentes, dans lequel la deuxième couche d'écartement (300) possède une extrémité interne en direction radiale (320) située à l'intérieur en direction radiale du retournement vers le haut le plus interne en direction radiale (10E).

11. Bandage pneumatique selon au moins une des revendications précédentes, dans lequel la deuxième couche d'écartement (300) possède une extrémité interne en direction radiale (320) située à l'intérieur en direction radiale du centre de la tringle de talon (2).

12. Bandage pneumatique selon au moins une des revendications précédentes, comprenant en outre une troisième couche d'écartement (400) située entre la première nappe externe en direction axiale (1F) et un deuxième bourrage sur tringle (112) ou entre la deuxième nappe externe en direction axiale (1G) et un deuxième bourrage sur tringle (112); dans lequel le deuxième bourrage sur tringle s'étend de préférence à l'extérieur en direction axiale des nappes de carcasse (1A, 1B, 1C, 1D, 1E) et des retournements vers le haut des nappes de carcasse (10A, 10B, 10C, 10D, 10E).

13. Bandage pneumatique selon la revendication 12, dans lequel une bandelette talon (122) est disposée en position adjacente et à l'extérieur du deuxième bourrage sur tringle (112) en direction axiale.

14. Bandage pneumatique selon au moins une des revendications précédentes, dans lequel le bandage pneumatique est un bandage pneumatique destiné à un aéroplane.
